# EUROPEAN PATENT APPLICATION

(11) **EP 1 424 222 A1**
(43) Date of publication of application: **02.06.2004**
(21) Application number: 02762974.0
(22) Date of filing: 03.09.2002
(51) Int. Cl.: B60C 19/12, B29C 73/22, C08L 7/00, C08L 9/00, C08K 5/098

(54) **PNEUMATIC TIRE AND METHOD OF PRODUCING THE SAME**

(30) Priority: 04.09.2001 JP 2001266941
(71) Applicant: THE YOKOHAMA RUBBER CO., LTD., Tokyo 105-8685 (JP); Honda Giken Kogyo Kabushiki Kaisha, Minato-ku, Tokyo 107-8556 (JP)
(72) Inventor: FUKUTOMI, Takashi, The Yokohama Rubber Co., Ltd., Hiratsuka-shi, Kanagawa 254-8601 (JP); AIBE, Sadafumi, The Yokohama Rubber Co., Ltd., Hiratsuka-shi, Kanagawa 254-8601 (JP)
(74) Representative: HOFFMANN - EITLE
(86) International application number: PCT/JP2002/008906
(87) International publication number: WO 2003/020540

(57) **Abstract**

A pneumatic tire having a puncture-preventive sealant layer that suppresses the generation of decomposition gas and is high in viscosity; and a method of producing the same. This pneumatic tire has a sealant layer disposed along the inner surface thereof, in which sealant layer is made of a rubber composition containing a cobalt salt in an amount of 0.07-0.5 parts by weight in terms of cobalt component for 100 parts by weight of rubber containing not less than 80 parts by weight of natural rubber or isoprene rubber.

## Description

### TECHNICAL FIELD

The present invention relates to a pneumatic tire suitable for a so-called puncture-less tire and a method of producing the same. More specifically, the present invention relates to a pneumatic tire having the excellent puncture-preventive function while eliminating disadvantages of a conventional puncture-less tire, and a method of producing the same.

### BACKGROUND ART

Japanese Patent Laid-Open Publication No. 53-55802 discloses a pneumatic tire provided with the puncture-preventive function, in which a layer is metamorphosed into the form of sealant by decomposing polyisobutylene with peroxide and disposed along the inner surface of the tire. In this pneumatic tire with the sealant layer, the sealant layer thereof functions to automatically seal a puncture when foreign matter such as a nail pierces a tread.

However, the sealant utilizing the decomposition of polyisobutylene by peroxide generates butane gas remarkably in the decomposition reaction thereof. Thus, the sealant is inappropriate for an industrial product. For example, when a large quantity of butane gas is generated upon tire vulcanization, the shape of the inner surface of the tire becomes uneven. Accordingly, there may be a disadvantage that the sealant loses the puncture-preventive function depending on cases.

### DISCLOSURE OF THE INVENTION

An object of the present invention is to provide a pneumatic tire including a puncture-preventive sealant layer which suppresses the generation of decomposition gas and has high viscosity, and a method of producing the same.

The pneumatic tire of the present invention achieving the foregoing object is characterized by having a sealant layer disposed along the inner surface thereof, in which the sealant layer is made of a rubber composition containing a cobalt salt in an amount of 0.07-0.5 parts by weight in terms of cobalt component for 100 parts by weight of rubber containing not less than 80 parts by weight of natural rubber or isoprene rubber.

Meanwhile, the method of producing the pneumatic tire of the present invention achieving the aforementioned object is characterized by forming the unvulcanized tire, in which a sealant layer is disposed along the inner surface thereof and made of the rubber composition containing a cobalt salt in an amount of 0.07-0.5 parts by weight in terms of cobalt component for 100 parts by weight of rubber containing not less than 80 parts by weight of natural rubber or isoprene rubber, and thereafter, decomposing the rubber composition of the sealant layer while vulcanizing the unvulcanized tire.

The inventors of the present invention explored the decomposition reaction which is caused by heat generated upon tire vulcanization and generates a small amount of gas. The inventors have learned that suitable decomposition reaction is obtained when a predetermined amount of cobalt salt is added to natural rubber or isoprene rubber and devised the invention. Since the sealant layer obtained by the decomposition reaction has high viscosity, it is possible to exhibit excellent puncture-preventive function.

In the present invention, it is preferable for the rubber composition of the sealant layer to further contain 1 to 10 parts by weight of trimethyl dihydroquinoline polymer for 100 parts by weight of rubber. The inventors have learned that molecular weight of the rubber composition constituting the sealant layer reduces significantly and the viscosity thereof further increases by thus adding a predetermined amount of cobalt salt as well as a predetermined amount of trimethyl dihydroquinoline polymer to natural rubber or isoprene rubber.

Moreover, when the sealant layer is disposed along the inner surface of the tire, it is preferable that the sealant layer be superposed on the inner side of an inner liner layer, and a cover sheet layer be superposed on the inner side of the sealant layer. This laminated structure ensures that the sealant layer can be prevented from sticking to a bladder of a vulcanizing machine upon vulcanization.

### BRIEF DESCRIPTION OF THE DRAWINGS

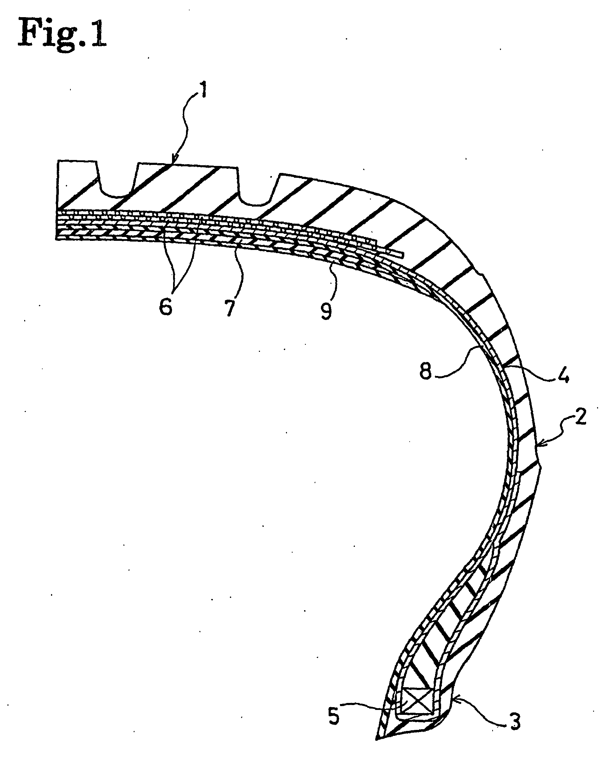

Fig. 1 is a meridian half sectional view showing a pneumatic tire formed in an embodiment of the present invention.

### BEST MODES FOR CARRYING OUT THE INVENTION

The constitution of the present invention is detailed below with reference to the attached drawing.

Fig. 1 shows a pneumatic tire formed in an embodiment of the present invention. Reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. A plurality of belt layers 6 are embedded on the periphery of the carcass layer 4 in the tread 1.

In the foregoing pneumatic tire, a sealant layer 7 is disposed in a region on the inner surface of the tire corresponding to the tread 1. More specifically, the sealant layer 7 is superposed on the inner side of an inner liner layer 8, and a cover sheet layer 9 is superposed on the inner side of the sealant layer 7. A rubber composition normally used for a tire may constitute the inner liner layer 8 and the cover sheet layer 9. The sealant layer 7 may be disposed not only in the region corresponding to the tread 1, but also in the regions corresponding to the sidewall 2 and the bead 3.

The foregoing sealant layer 7 is constituted by a rubber composition containing a cobalt salt in an amount of 0.07-0.5 parts by weight in terms of cobalt component for 100 parts by weight of rubber containing not less than 80 parts by weight of natural rubber or isoprene rubber, and further 1 to 10 parts by weight of 2, 2, 4 - trimethyl - 1, 3 - dihydroquinoline polymer, as required. Part of natural rubber or isoprene rubber is decomposed, and thus this rubber composition has high viscosity.

In the foregoing pneumatic tire, when foreign matter such as a nail pierces the tread 1 and enters the tire, the rubber composition of the sealant layer 7 sticks to the foreign matter such as a nail and prevent leakage of air. On the other hand, when the foreign matter such as a nail comes off, the sealant layer 7 seals the puncture to prevent the leakage of air. The rubber composition constituting the sealant layer 7 may contain rubber normally used for a tire, in addition to natural rubber or isoprene rubber. Nevertheless, if parts by weight of natural rubber or isoprene rubber are less than 80 out of 100 parts by weight of rubber, the decomposition reaction by cobalt salt becomes insufficient. Accordingly, the viscosity of the sealant layer 7 becomes deficient. Furthermore, an adhesive, a plasticizer, a catalyst and the like may be added to the rubber composition constituting the sealant layer 7 as necessary. In addition, rubber powder, short fiber and the like may be added to the rubber composition.

Cobalt naphthenate, cobalt neodecanoate-ortho-borate, cobalt abietate or the like may be used as cobalt salt. If a compounding amount of cobalt salt for 100 parts by weight of rubber is less than 0.07 parts by weight in terms of cobalt component, the decomposition reaction of rubber becomes insufficient. Accordingly, the viscosity of the sealant layer 7 becomes deficient. On the contrary, if the compounding amount exceeds 0.5 parts by weight, improvement in the decomposition effects cannot be expected. Moreover, if a compounding amount of trimethyl dihydroquinoline polymer for 100 parts by weight of rubber is less than 1 part by weight, acceleration effects of decomposition reaction becomes insufficient. By contrast, if the compounding amount exceeds 10 parts by weight, the decomposition reaction is accelerated excessively. Thus, this causes the flowing and maldistribution of the sealant in the tire while driving.

Next, a method of producing the foregoing pneumatic tire is explained. In the pneumatic tire, it is possible to form the rubber composition of the sealant layer as compounded above into the form of sheet. An unvulcanized tire is formed so as to dispose the sealant layer made of the sheet-formed rubber composition between the inner liner layer and the cover sheet layer along the inner surface of the tire. Thereafter, the unvulcanized tire is inserted into a mold and heated in the same way as the normal process. By thus heating the unvulcanized tire, vulcanization develops in portions excluding the sealant layer while the rubber composition is decomposed in the sealant layer and exhibits high viscosity. In this case, the generation of gas is extremely small when natural rubber or isoprene rubber is decomposed by cobalt salt, unlike the conventional decomposition of polyisobutylene by peroxide. Accordingly, while suppressing the generation of decomposition gas, it is possible to obtain a pneumatic tire provided with a puncture-preventive sealant layer having high viscosity.

Note that, according to the foregoing method of producing a pneumatic tire, it is possible to efficiently produce a pneumatic tire provided with a puncture-preventive sealant layer. However, the present invention can employ other producing methods. For example, the aforementioned rubber composition of the sealant layer may be decomposed by use of heating means such as a kneader, a heat roll and a heat press, and the adhesive composition thereof may be attached to the inner surface of the tire. Alternatively, the adhesive composition may be formed into a sheet and pasted on the inner surface of the tire.

### Examples

A basic experiment on a sealant layer was conducted.

### Conventional Example:

A rubber composition was prepared, containing 15 parts by weight of peroxide for 100 parts by weight of polyisobutylene (PIB).

### Example 1:

A rubber composition was prepared, containing cobalt naphthenate in an amount of 0.4 parts by weight in terms of cobalt component for 100 parts by weight of natural rubber (NR).

### Example 2:

A rubber composition was prepared, containing cobalt neodecanoate-ortho-borate (MANOBOND) in an amount of 0.4 parts by weight in terms of cobalt component for 100 parts by weight of natural rubber (NR).

### Example 3:

A rubber composition was prepared, containing cobalt neodecanoate-ortho-borate (MANOBOND) in an amount of 0.4 parts by weight in terms of cobalt component and 5 parts by weight of trimethyl dihydroquinoline polymer (antioxidant RD) for 100 parts by weight of natural rubber (NR).

These rubber compositions of the conventional example and Examples 1 to 3 were processed into the form of sheet, put into dies and heated at 160°C for 15 minutes. At this time, an amount of gas generation by decomposition reaction was relatively evaluated. Moreover, the viscosity of the obtained sealant layer was relatively evaluated. Furthermore, as for Examples 2 and 3, molecular weight of the rubber compositions constituting the sealant layer was measured. The results are listed in Table 1.

**Table 1**

| | Conventional Example | Example 1 | Example 2 | Example 3 |
|---|---|---|---|---|
| Components of Rubber Composition of Sealant Layer | Polyisobutylene and Peroxide | Natural Rubber and Cobalt Naphthenate | Natural Rubber and / MANOBOND | Natural Rubber, MANOBOND and Antioxidant (RD) |
| Amount of Gas Generation | Large | Small | Small | Small |
| Viscosity | Medium | Medium | High | High |
| Molecular Weight | Unmeasured | Unmeasured | 76,000 | 28,000 |

As apparent from Table 1, the sealant layers of Examples 1 to 3 had less amount of gas generation by decomposition reaction than the conventional example and had high viscosity. In addition, when cobalt salt and trimethyl dihydroquinoline polymer were used together, the molecular weight of the rubber composition constituting the sealant layer was smaller.

Hereinbefore, the preferred embodiment of the present invention has been detailed. However, it should be understood that various changes, substitutions and replacements can be made therein without departing from spirit and scope of the inventions as defined by the appended claims.

### INDUSTRIAL APPLICABILITY

According to the present invention, a sealant layer made of a rubber composition contains a cobalt salt in an amount of 0.07-0.5 parts by weight in terms of cobalt component for 100 parts by weight of rubber containing not less than 80 parts by weight of natural rubber or isoprene rubber. The sealant layer is applied to the inner surface of the tire. Thus, it is possible to obtain a pneumatic tire provided with a puncture-preventive sealant layer having high viscosity while suppressing the generation of decomposition gas.

## Claims

1. A pneumatic tire, in which a sealant layer made of a rubber composition containing a cobalt salt in an amount of 0.07-0.5 parts by weight in terms of cobalt component for 100 parts by weight of rubber containing not less than 80 parts by weight of natural rubber or isoprene rubber is disposed along an inner surface of the tire.

2. The pneumatic tire according to claim 1, wherein the rubber composition of the sealant layer contains 1 to 10 parts by weight of trimethyl dihydroquinoline polymer for 100 parts by weight of the rubber.

3. The pneumatic tire according to any one of claims 1 and 2, wherein the sealant layer is superposed on an inner side of an inner liner layer, and a cover sheet layer is superposed on an inner side of the sealant layer.

4. A method of producing a pneumatic tire, in which an unvulcanized tire, where a sealant layer made of a rubber composition containing a cobalt salt in an amount of 0.07-0.5 parts by weight in terms of cobalt component for 100 parts by weight of rubber containing not less than 80 parts by weight of natural rubber or isoprene rubber is disposed along an inner surface of the tire, is formed, and thereafter, the unvulcanized tire is vulcanized at the same time as that the rubber composition of the sealant layer is decomposed.

5. The method of producing a pneumatic tire according to claim 4, wherein the rubber composition of the sealant layer contains 1 to 10 parts by weight of trimethyl dihydroquinoline polymer for 100 parts by weight of the rubber.

6. The method of producing a pneumatic tire according to any one of claims 4 and 5, wherein the unvulcanized tire, in which the sealant layer is superposed on an inner side of an inner liner layer and a cover sheet layer is superposed on an inner side of the sealant layer, is formed.
